# FASCICULE DE BREVET EUROPEEN

(11) **EP 1 685 996 B1**
(45) Date de publication et mention de la délivrance du brevet: **08.10.2008**
(21) Numéro de dépôt: 06290121.0
(22) Date de dépôt: 18.01.2006
(51) Int. Cl.: B60J 7/20

(54) **Véhicule automobile possedant une face d'un ouvrant recouverte d'une feuille sensible à la pression**
Kraftfahrzeug mit einer von einer druckempfindlichen Folie bedeckten Flügelseite
Automotive vehicle with a wing side covered with a pressure sensitive sheet

(30) Priorité: 28.01.2005 FR 0500891
(43) Date de publication de la demande: 02.08.2006
(73) Titulaire: Heuliez, 79140 Cerizay (FR)
(72) Inventeur: Queveau, Paul, 79140 Montravers (FR); Dubreuil, Régis, 49300 Cholet (FR); Baudeau, Marc, 79140 Bretignolles (FR)
(74) Mandataire: Bredema

(56) Documents cités:
- EP-A- 0 943 473
- EP-A- 1 228 914
- EP-A- 1 447 653
- DE-A1- 10 315 188
- US-A- 5 592 777
- US-A- 5 864 214

## Description

L'invention concerne un ouvrant de véhicule automobile dont les mouvements de fermeture et/ou d'ouverture sont actionnés par des moyens moteurs. Plus particulièrement, l'invention concerne des ouvrants pour véhicule du type cabriolet et notamment un capot de coffre ou un toit escamotable composé de plusieurs éléments de toit rigides.

Dans l'art antérieur, il est connu des ouvrants de véhicule convertible dont les mouvements d'ouverture et de fermeture sont actionnés par des moyens moteurs.

Un des problèmes de ce type d'ouvrant réside dans le fait que la surface intérieure dirigée vers une partie du véhicule à recouvrir est susceptible de rencontrer un objet ou un corps lors de son mouvement.

En particulier, la surface intérieure d'un élément de toit peut rencontrer une partie du corps d'une personne, notamment sa tête ou un objet mal positionné. De même la surface intérieure d'un capot de coffre peut rencontrer des objets mal positionnés dépassant du coffre.

Par conséquent, lors du mouvement d'un ouvrant actionné par des moyens moteurs et en particulier lors d'un mouvement automatisé, il est nécessaire de pouvoir détecter des éventuelles interférences avec l'ouvrant et de pouvoir agir en conséquence sur la cinématique dudit mouvement.

Le document EP 0 943 473 A2, qui divulgue le préambule de la revendication 1, décrit un tel système.

Dans l'art antérieur, il est connu des capteurs sans contacts, tels que les capteurs capacitifs, qui permettent de détecter des éventuelles interférences entre l'ouvrant et un corps ou un objet. Cependant, les capteurs sans contacts présentent l'inconvénient d'être sensibles à l'environnement (pluie, vent, passage bref d'un corps). Or, cette sensibilité à l'environnement peut entraîner des arrêts intempestifs du mouvement de l'ouvrant.

Le document EP 1 228 914 A2 décrit un tel capteur capacitif pour une cloison déplaçable dans le compartiment à bagage.

L'invention a pour but de proposer une solution à ce problème qui soit à la fois simple, fiable, économique, peu encombrante et facilement intégrable dans un véhicule.

A cet effet, l'invention propose un véhicule automobile, et notamment un véhicule du type cabriolet, comportant au moins un ouvrant dont les mouvements de fermeture et/ou d'ouverture sont actionnés par des moyens moteurs pilotés par une unité de pilotage, ledit ouvrant possédant au moins une surface intérieure dirigée vers une partie du véhicule à recouvrir, caractérisé en ce que ladite surface intérieure est recouverte en totalité ou en partie d'une feuille sensible à la pression apte à émettre un signal fonction de ladite pression, ladite unité de pilotage étant agencée pour modifier la cinématique du mouvement en fonction du signal de pression mesurée au cours dudit mouvement.

Ainsi, les mouvements de fermeture et/ou d'ouverture des ouvrants sont sécurisés.

De plus, un avantage de la détection par feuille sensible à la pression réside dans le fait qu'un tel capteur permet de distinguer naturellement des interférences qui ne doivent pas être prises en compte d'interférences qui doivent être prises en compte. En effet un tel capteur ne réagit qu'à partir d'un contact effectif. Ainsi, la sensibilité à l'environnement extérieure est fortement diminuée.

D'autres objets et avantages de l'invention apparaîtront au cours de la description qui suit, faite en référence aux dessins annexés, dans lesquels :
- la figure 1 représente un véhicule automobile dont les ouvrants possédant une feuille sensible à la pression sur leurs faces intérieures ont été hachurés
- la figure 2a représente une coupe transversale selon l'axe I-I de la figure 1 montrant une réalisation selon laquelle la surface intérieure est directement recouverte d'une feuille sensible à la pression (FSP).
- la figure 2b représente une coupe transversale selon l'axe I-I de la figure 1 montrant une réalisation selon laquelle une FSP est fixée sur un panneau lui-même fixée à la surface intérieure du capot.
- la figure 3 représente une vue de dessous du capot de coffre de la figure 2b.
- la figure 4a représente un coffre de véhicule possédant une zone de rangement des éléments de toit séparée du compartiment à bagages par une cloison déplaçable, lorsque le toit escamotable est dans sa position déployée.
- la figure 4b représente le coffre de la figure 4 a lorsque les éléments de toit sont escamotés dans leur zone de rangement.
- la figure 5 représente un coffre de véhicule possédant une zone de rangement des éléments de toit disposée à l'avant du coffre et séparée du compartiment à bagages par une cloison.

Le véhicule 1 comprend un coffre 2 pourvu d'un capot 3.

Le capot 3 possède deux positions d'ouverture. En effet, le capot 3 peut s'ouvrir au choix de l'avant vers l'arrière pour le rangement du toit escamotable 4 ou de l'arrière vers l'avant pour accéder au compartiment à bagages 5.

Le toit escamotable 4 est composé d'éléments de toits qui sont déplaçables entre une position déployée dans laquelle il recouvre l'habitacle 8 du véhicule 1 et une position escamotée dans laquelle ils sont rangés dans le coffre 2 du véhicule 1.

Les mouvements d'ouverture et de fermeture du toit escamotable 4 et du capot 3 de coffre sont réalisés par des moyens moteurs. Les moyens moteurs sont pilotés par une unité de pilotage.

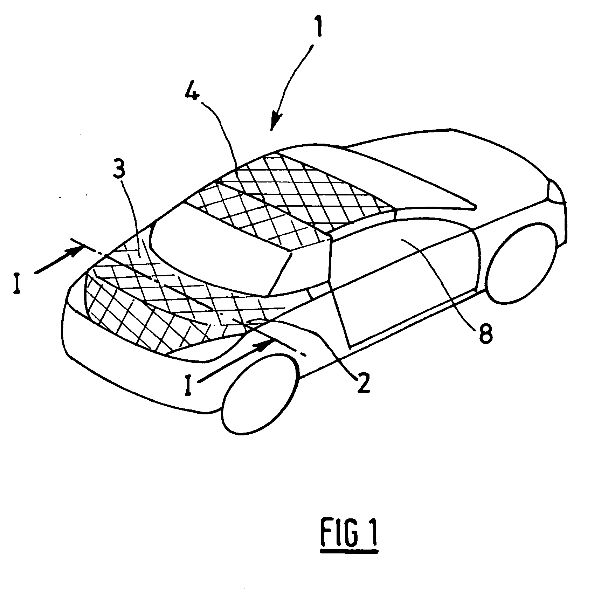

Dans le mode de réalisation détaillée sur la figure 1, le capot 3 de coffre, ainsi que les éléments de toit escamotable 4 possèdent une surface intérieure 6 recouverte en totalité ou en partie par un capteur de pression sous forme d'une feuille sensible à la pression (FSP) 7. La surface intérieure 6 de ces ouvrants est la surface dirigée vers la partie du véhicule 1 à recouvrir.

La surface intérieure 6 des éléments de toit est donc la surface des éléments de toit 4 dirigée vers l'habitacle 8 du véhicule 1. De même, la surface intérieure 6 du capot 3 de coffre est la surface inférieure dirigée vers le coffre 2 du véhicule.

Les capteurs se présentent sous la forme d'une feuille mince 7 dont l'épaisseur est de l'ordre de quelques dixièmes de millimètres. La feuille 7 est constituée de plusieurs couches superposées. Une couche de matériau sensible à la pression, tel qu'un matériau semiconducteur, est intercalée entre deux couches de matériau conducteur qui forment les électrodes.

Une pression exercée sur la feuille 7 fait varier sa résistance électrique. La variation de résistance électrique est facilement détectable et mesurable. Ainsi, la feuille sensible à la pression 7 émet un signal fonction de la pression exercée.

Selon un mode de réalisation, un dispositif électroluminescent est associé au capteur à feuille sensible à la pression 7.

Le dispositif électroluminescent permet d'éclairer l'intérieur du véhicule : l'habitacle 8 et/ou le coffre 2. Ce dispositif peut également permettre d'indiquer par éclairage (ou extinction de l'éclairage) une zone de contact avec un corps ou un objet.

Le dispositif électroluminescent se présente également sous forme de feuilles comprenant plusieurs couches. Une couche de matériau diélectrique sur laquelle a été appliqué un matériau luminescent est intercalée entre deux couches conductrices formant électrodes. Un courant appliqué aux électrodes permet d'activer la matière luminescente et ainsi d'éclairer.

La feuille sensible à la pression 7 et la feuille électroluminescente sont liées entre elle de manière à former une seule feuille.

Dans un mode de réalisation, la feuille précédemment décrite est recouverte d'une couche de couverture permettant une isolation électrique et une protection par rapport à l'environnement extérieur.

La feuille électroluminescente peut s'appliquer sur tout ou partie de la surface de la feuille sensible à la pression. Elle peut aussi être décomposée sous la forme d'un damier présentant différentes zones luminescentes.

Le véhicule 1 est également équipé d'une unité de pilotage. Cette unité de pilotage comprend un dispositif d'analyse et de comparaison du signal de pression détectée, un calculateur et un dispositif de commande des moyens moteurs. Ainsi, l'unité de pilotage est agencée pour modifier la cinématique du mouvement en fonction du signal de pression mesurée au cours du mouvement de l'ouvrant 3,4.

La modification de la cinématique du mouvement de l'ouvrant consiste à ralentir, arrêter ou renverser le mouvement.

Notons que la plage de pression détectée est très étendue, elle s'étend de quelques grammes par centimètre carré à plusieurs kilogrammes par centimètre carré. Ceci permet notamment de pouvoir fixer des seuils de détection et en particulier de pouvoir fixer des paliers croissants.

Dans un mode de réalisation de l'invention, il est prévu de disposer de trois seuils de détection. Ces seuils de détection permettent des modifications de la cinématique du mouvement différentes selon la pression exercée.

Le fonctionnement de l'unité de pilotage est le suivant : l'unité de pilotage analyse le signal émis par la feuille sensible à la pression. L'unité de pilotage compare ensuite le signal émis avec les seuils croissants de détection. Enfin, en fonction de la comparaison du signal émis par la FSP, l'unité de pilotage commande les moyens moteurs afin de modifier la cinématique du mouvement de l'ouvrant.

Le premier seuil est le seuil bas de détection. Tout signal de détection inférieure à ce seuil ne provoque pas de modification de la cinématique du mouvement de l'ouvrant 3,4. Ainsi, la sensibilité aux événements extérieurs est limitée. Au contraire, tout signal de détection supérieur à ce seuil provoque le ralentissement du mouvement de l'ouvrant 3,4.

Le dépassement du second seuil provoque l'arrêt du mouvement de l'ouvrant 3,4.

Enfin, le dépassement du dernier seuil ou seuil haut de détection provoque le renversement du mouvement de l'ouvrant 3,4.

Dans un mode de réalisation de l'invention, il est également possible d'envisager que l'unité de pilotage surveille la variation de la pression au cours du temps et/ou l'accélération de cette variation. Ces paramètres peuvent également être comparés à des seuils afin d'affecter différemment le mouvement de l'ouvrant 3,4.

La mise en oeuvre et l'intégration d'une FSP 7 est extrêmement simple. Ainsi, il est par exemple possible d'équiper aisément un véhicule déjà commercialisé.

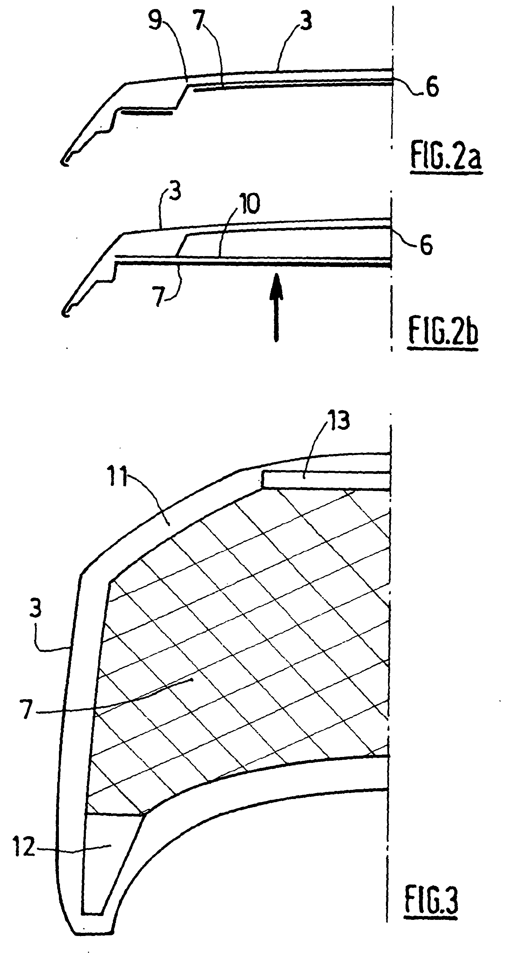

Dans le mode de réalisation représenté sur la figure 2a, la FSP 7 est fixée, par collage ou par adhérence, directement sur la surface interne 6 de l'ouvrant concerné 3,4. La FSP 7 représentée sur cette figure est directement fixée contre la doublure 9 du capot 3.

Notons que les FSP 7 possèdent une flexibilité permettant d'épouser des surfaces incurvées. En outre, les FSP 7 peuvent aisément posséder une forme adaptée à la surface 6 de l'ouvrant à recouvrir.

Dans un autre mode de réalisation représenté sur les figures 2b et 3, la FSP 7 est fixée préalablement sur une plaque intermédiaire 10 qui est ensuite installée sur la surface intérieure 6 de l'ouvrant 3,4 concerné.

La feuille sensible à la pression 7 ne recouvre pas la zone de portée du joint périphérique 11 ainsi que les zones recevant les articulations libérables 12,13.

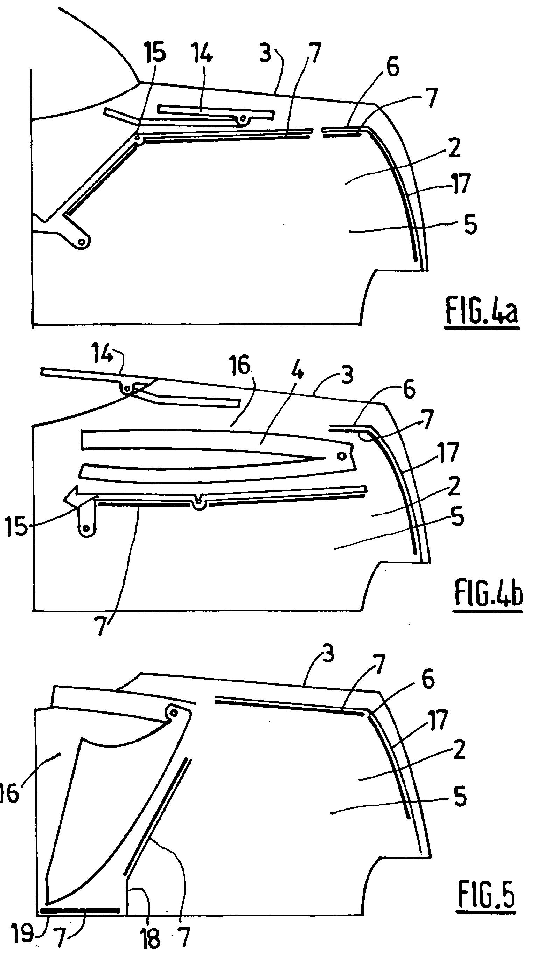

Les figure 4a et 4b représente un autre mode de réalisation de l'invention. Le capot 3 de coffre est équipé d'une tablette coulissante 14. Cette tablette coulissante 14 occupe une position rétractée sous le capot 3 de coffre lorsque le toit 4 est en position de recouvrement de l'habitacle 8 (figure 4a) ou une position déployée vers l'avant, dans le prolongement du capot 3 lorsque le toit 4 est rangé (figure 4b).

Dans le mode de réalisation représenté sur les figures 4a et 4b, les feuilles sensibles à la pression 7 sont fixées sur une cloison déplaçable 15, sur la face dirigée vers le compartiment à bagages 5. Cette cloison déplaçable 15 permet de séparer une zone de rangement 16 des éléments de toit 4 du compartiment à bagages 5. Afin de permettre un déplacement de la cloison 15, celle-ci est composée de plusieurs éléments différents articulés entre eux. La cloison déplaçable 15 occupe une position haute quand le toit 4 recouvre l'habitacle 8 du véhicule 1 (figure 4a) et une position basse lorsque le toit 4 est escamoté dans sa zone de rangement 16.

Dans un mode de réalisation non représenté, la cloison déplaçable 15 est souple. La cloison 15 est enroulée autour d'un cylindre lorsque le toit escamotable est dans sa position déployée et déroulée entre la zone de rangement 16 des éléments de toit 4 et le compartiment à bagages 5 lorsque le toit escamotable se situe dans sa zone de rangement 16. Une feuille sensible à la pression 7 est fixé sur la cloison déplaçable 15, plus précisément sur sa face dirigée vers le compartiment à bagages 5.

La partie arrière 17 du capot 3 est également équipée d'une feuille sensible à la pression 7.

La figure 5 représente un autre mode de réalisation de l'invention. Le coffre 2 possède deux compartiments 5, 16 séparés par une cloison 18 : une zone de rangement 16 des éléments de toit 4 et un compartiment à bagages 5. Des feuilles sensibles à la pression 7 sont disposées dans la zone de rangement 16 des éléments de toit 4. Une première FSP 7 est disposée au fond 19 de la zone de rangement 16 du toit 4 et une seconde FSP 7 est disposée sur la surface de la cloison 18 disposée à l'intérieur de ladite zone 16. Les FSP 7 disposées dans la zone de rangement 16 des éléments de toit 4 permettent de détecter la présence d'objet dans cette zone. Ainsi, si un objet est détecté, l'unité de pilotage du toit escamotable 4 commande l'arrêt des moyens moteurs et par conséquent du mouvement d'escamotage du toit 4.

Dans un autre mode de réalisation non représenté, un ruban sensible à la pression, apte à émettre un signal fonction de ladite pression , peut également être prévu sur la surface intérieure de l'ouvrant à proximité d'une arête située en regard d'un élément de carrosserie ou d'une partie mobile dudit ouvrant lorsque l'ouvrant est dans sa position fermée. Ainsi, l'ouvrant est également sécurisé notamment vis-à-vis d'éventuelles pincements d'une main ou d'objets mal positionnés entre l'élément de carrosserie et l'arête.

## Revendications

1. Véhicule automobile (1), et notamment véhicule du type cabriolet, comportant au moins un ouvrant (3, 4) dont les mouvements de fermeture et/ou d'ouverture sont actionnés par des moyens moteurs pilotés par une unité de pilotage, ledit ouvrant (3, 4) possédant au moins une surface intérieure (6) dirigée vers une partie (2,8) du véhicule à recouvrir, **caractérisé en ce que** ladite surface intérieure (6) est recouverte en totalité ou en partie d'une feuille sensible à la pression (7) apte à émettre un signal fonction de ladite pression, l'unité de pilotage possédant des moyens de comparaison du signal de pression mesurée à des seuils croissants et étant agencée pour ralentir, arrêter ou renverser le mouvement de l'ouvrant en fonction de la comparaison dudit signal de pression mesurée auxdits seuils de pression.

2. Véhicule automobile (1) selon la revendication 1, **caractérisé en ce que** ladite feuille sensible à la pression (7) est fixée directement ou par l'intermédiaire d'un panneau (10) sur la surface intérieure (6).

3. Véhicule automobile (1) selon la revendication 1 ou 2, **caractérisé en ce que** la feuille sensible à la pression (7) comprend en outre un dispositif électroluminescent permettant d'éclairer l'intérieur (8, 2) du véhicule (1) ou une zone dans laquelle la pression est détectée.

4. Véhicule automobile (1) selon la revendication 1, **caractérisé en ce que** l'unité de pilotage surveille la variation de la pression au cours du temps et/ou l'accélération de cette variation et les compare à des seuils croissants.

5. Véhicule automobile (1) selon l'une quelconque des revendications précédentes, **caractérisé en ce que** l'ouvrant est un capot (3) de coffre ou un élément de toit rétractable(4).

6. Véhicule automobile (1) selon l'une des revendications précédentes, **caractérisé en ce qu'**au moins une paroi intérieure du coffre est pourvue d'une feuille sensible à la pression (7).

7. Véhicule automobile (1) selon la revendication 6, **caractérisé en ce qu'**il comprend un toit escamotable composé de plusieurs éléments de toit (4) rigides, le coffre possédant une zone de rangement (16) des éléments de toit et un compartiment à bagages (5) séparé par une cloison déplaçable (15), ladite cloison déplaçable (15) étant recouverte totalement ou en partie d'une feuille sensible à la pression (7).

8. Véhicule automobile (1) selon la revendication 7, **caractérisé en ce que** la cloison déplaçable (15) est composée de plusieurs éléments de cloison ou d'une cloison souple enroulable autour d'un cylindre.

9. Véhicule automobile selon la revendication 6, **caractérisé en ce qu'**il comprend un toit escamotable composé de plusieurs éléments de toit (4) rigides, le coffre possédant une zone de rangement (16) des éléments de toit et un compartiment à bagages (5) séparé par une cloison (18), une première feuille sensible à la pression (7) étant disposée sur la surface de la cloison (18) disposée à l'intérieur de ladite zone de rangement et une seconde feuille sensible à la pression (7) étant disposée sur le fond (19) de la zone de rangement (16).

## Claims

1. A motor vehicle (1) and more particularly a vehicle of the convertible type including at least an opening element (3, 4), the closing and/or opening motions of which are actuated by motor means controlled by a control unit, said opening element (3, 4) having at least an inner surface (6) oriented towards a part (2, 8) of the vehicle to be covered, **characterised in that** said inner surface (6) is totally or partially covered with a pressure sensitive sheet (7) capable of emitting a signal depending on said pressure, the control unit having means for comparing the pressure signal measured at increasing thresholds and being so arranged as to slow down, stop or reverse the motion of the opening element as a function of the comparison of said pressure signal measured at said pressure thresholds.

2. A motor vehicle (1) according to claim 1, **characterised in that** said pressure sensitive sheet (7) is fixed directly or through a panel (10) onto the inner surface (6).

3. A motor vehicle (1) according to claim 1 or 2, **characterised in that** the pressure sensitive sheet (7) further comprises an electroluminescent device making it possible to illuminate the interior compartment (8, 2) of the vehicle (1) or an area where the pressure is detected.

4. A motor vehicle (1) according to claim (1), **characterised in that** the control unit monitors the variation in the pressure over time and/or the acceleration of such variation and compares them to increasing thresholds.

5. A motor vehicle (1) according to any one of the preceding claims, **characterised in that** the opening element is the hood (3) of the trunk or an element of a retractable roof (4).

6. A motor vehicle (1) according to one of the preceding claims, **characterised in that** at least one inner wall of the trunk is provided with the pressure sensitive sheet (7).

7. A motor vehicle (1) according to claim 6, **characterised in that** it includes a retractable roof composed of several rigid roof elements (4), the trunk having an area for storing (16) the roof elements and a luggage compartment (5) separated by a movable partition (15), said movable partition (15) being totally or partially covered with a pressure sensitive sheet (7).

8. A motor vehicle (1) according to claim 7, **characterised in that** the movable partition (15) is composed of several partition elements or a flexible partition which can be winded around a cylinder.

9. A motor vehicle according to claim 6, **characterised in that** it includes a retractable roof composed of several rigid roof elements (4), the trunk having an area for putting away (16) the roof elements and a luggage compartment (5) separated by a partition (18), a first pressure sensitive sheet (7) being disposed on the surface of the partition (18), positioned inside said storage area and a second pressure sensitive sheet (7) being disposed on the bottom (19) the storage area (16).

## Patentansprüche

1. Kraftfahrzeug (1), und insbesondere Fahrzeug vom Typ Cabriolet, mit mindestens einem Verdeck (3, 4), dessen Schließ- und/oder Öffnungsbewegungen von motorischen Mitteln aktiviert werden, die von einer Steuereinheit gesteuert werden, wobei das genannte Verdeck (3, 4) mindestens eine Innenfläche (6) aufweist, die zu einem abzudeckenden Teil (2, 8) des Fahrzeugs hin gerichtet ist, **dadurch gekennzeichnet, dass** die genannte Innenfläche (6) komplett oder teilweise von einer druckempfindlichen Folie (7) bedeckt ist, die je nach dem genannten Druck ein Signal abgeben kann, wobei die Steuereinheit Vergleichsmittel des gemessenen Drucksignals mit ansteigenden Grenzwerten aufweist und angeordnet ist, um die Bewegung des Verdecks zu verlangsamen, anzuhalten oder umzukehren, entsprechend dem Vergleich des genannten gemessenen Drucksignals mit den genannten Druckgrenzwerten.

2. Kraftfahrzeug (1) gemäß Anspruch 1, **dadurch gekennzeichnet, dass** die genannte druckempfindliche Folie (7) direkt oder über eine Platte (10) an der Innenfläche (6) befestigt ist.

3. Kraftfahrzeug (1) gemäß Anspruch 1 oder 2, **dadurch gekennzeichnet, dass** die druckempfindliche Folie (7) ferner eine Licht erzeugende Vorrichtung umfasst, die den Innenraum (8, 2) des Fahrzeugs (1) oder einen Bereich, in dem der Druck gemessen wird, beleuchtet.

4. Kraftfahrzeug (1) gemäß Anspruch 1, **dadurch gekennzeichnet, dass** die Steuereinheit die Druckschwankung im Laufe der Zeit und/oder die Beschleunigung dieser Schwankung überwacht und sie mit ansteigenden Grenzwerten vergleicht.

5. Kraftfahrzeug (1) gemäß einem der vorangehenden Ansprüche, **dadurch gekennzeichnet, dass** das Verdeck eine Haube (3) des Kofferraums oder ein Schiebedachelement (4) ist.

6. Kraftfahrzeug (1) gemäß einem der vorangehenden Ansprüche, **dadurch gekennzeichnet, dass** mindestens eine Innenwand des Kofferraums eine druckempfindliche Folie (7) aufweist.

7. Kraftfahrzeug (1) gemäß Anspruch 6, **dadurch gekennzeichnet, dass** es ein einklappbares, aus mehreren starren Dachelementen (4) bestehendes Dach umfasst, wobei der Kofferraum einen Verstaubereich (16) der Dachelemente und ein durch eine verschiebbare Wand (15) abgetrenntes Gepäckfach (5) aufweist, wobei die verschiebbare Wand (15) komplett oder teilweise von einer druckempfindlichen Folie (7) bedeckt ist.

8. Kraftfahrzeug (1) gemäß Anspruch 7, **dadurch gekennzeichnet, dass** die verschiebbare Wand (15) aus mehreren Wandelementen oder aus einer flexiblen, um eine Walze herum aufrollbaren Wand besteht.

9. Kraftfahrzeug gemäß Anspruch 6, **dadurch gekennzeichnet, dass** es ein einklappbares, aus mehreren starren Dachelementen (4) bestehendes Dach umfasst, wobei der Kofferraum einen Verstaubereich (16) der Dachelemente und ein durch eine Wand (18) abgetrenntes Gepäckfach (5) aufweist, wobei eine erste druckempfindliche Folie (7) an der Fläche der Wand (18) angeordnet ist, die innerhalb des genannten Verstaubereichs liegt, und eine zweite druckempfindliche Folie (7) an der Rückwand (19) des Verstaubereichs (16) angeordnet ist.
